# EUROPEAN PATENT APPLICATION

(11) **EP 4 557 823 A1**
(43) Date of publication of application: **21.05.2025**
(21) Application number: 23854205.4
(22) Date of filing: 26.07.2023
(51) Int. Cl.: H04W 28/10, H04L 5/00

(54) **UPLINK TRANSMISSION METHOD, APPARATUS, DEVICE AND SYSTEM, AND STORAGE MEDIUM**

(30) Priority: 17.08.2022 CN 202210989465
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: ZHENG, Yi, Beijing 100032 (CN); LI, Yan, Beijing 100032 (CN); ZUO, Jun, Beijing 100032 (CN); CAO, Yuhua, Beijing 100032 (CN)
(74) Representative: Murgitroyd & Company
(86) International application number: PCT/CN2023/109335
(87) International publication number: WO 2024/037301

(57) **Abstract**

The present disclosure provides an uplink transmission method, device, equipment, system, and a storage medium, which can solve the problem that in a multiple transmission scenario, uplink transmission of a UE may not be correctly received. The method includes: determining a timing advance according to a timing and/or network nodes; and performing uplink transmission with the network nodes according to the timing advance.

## Description

### CROSS-REFERENCE TO RELATED APPLICATION

The present application is filed based on and claims the priority of Chinese Application No. 202210989465.9 filed on August 17, 2022, the disclosure of which are incorporated in their entireties by reference herein.

### TECHNICAL FIELD

The present disclosure relates to the field of communication technologies, and in particular, to an uplink transmission method, device, equipment, system and storage medium.

### BACKGROUND

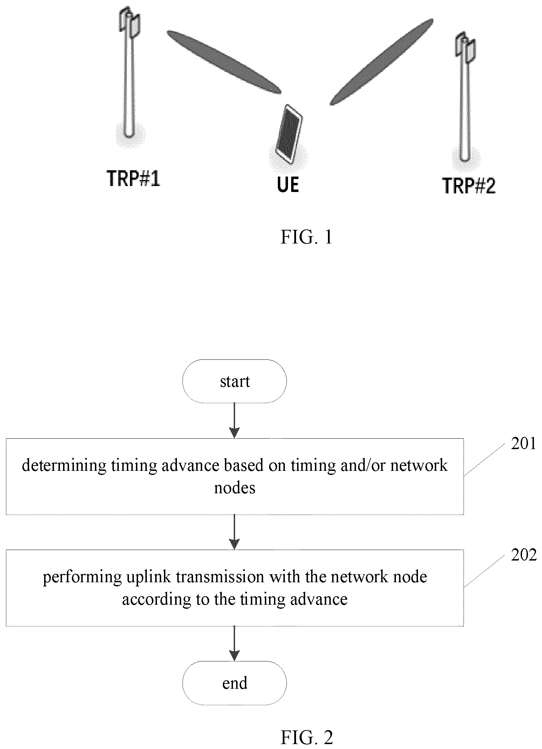

In a multi-transmission reception point (TRP) scenario, user equipment (UE) can switch between different TRPs. For example, as shown in FIG. 1, the UE can switch between TRP#1 and TRP#2 and perform transmission with TRP#1 and TRP#2 respectively. For example, the UE can first perform downlink transmission with TRP#1, and then perform uplink transmission with TRP# 2.

Currently, the same timing advance (TA) is used for uplink transmission between the UE and different TRPs, which may cause the problem that the uplink transmission cannot be received correctly.

### SUMMARY

One embodiment of the present disclosure provides an uplink transmission method, device, equipment, system and storage medium, which can solve the problem that uplink transmission of the UE may not be correctly received in a multi-transmission scenario.

In a first aspect, one embodiment of the present disclosure provides an uplink transmission method, applied to a user equipment, including:
determining timing advance based on timing and/or network nodes;
performing uplink transmission with the network nodes according to the timing advance.

Optionally, when a preceding transmission is a first transmission, the timing is a first timing; or
when a preceding transmission is a second transmission, the timing is a second timing; or
when receiving a downlink scheduling or downlink control information indication or uplink grant sent by a first network node, the timing is the first timing; or,
when receiving a downlink scheduling or downlink control information indication or uplink grant sent by a second network node, the timing is the second timing.

Optionally, the first timing is a timing of the first network node, or reception time or reception timing of the user equipment to the first network node;
the second timing is a timing of the second network node, or reception time or reception timing of the user equipment to the second network node.

Optionally, the first transmission includes: transmission with the first network node, or transmission in which a coreset pool index associated with the transmission is a first value, or transmission in which a coreset pool index of a control resource set of a control channel for scheduling the transmission is a first value; and/or,
the second transmission includes: transmission with a second network node, or transmission in which a coreset pool index associated with the transmission is a second value, or transmission in which a coreset pool index of a control resource set of a control channel for scheduling the transmission is a second value.

Optionally, the performing uplink transmission with the network nodes according to the timing advance includes:
transmission of a coreset pool index associated with the uplink transmission, or transmission of a coreset pool index of a control resource set of a control channel for scheduling transmission.

Optionally, the determining timing advance based on timing and/or network nodes, includes:
determining the timing advance being a third timing advance when the timing is a first timing and a second transmission is performed; or,
determining the timing advance being a fourth timing advance when the timing is a second timing and a first transmission is performed;
wherein the first transmission includes: transmission with a first network node, or transmission in which a coreset pool index associated with the transmission is a first value, or transmission in which a coreset pool index of a control resource set of a control channel for scheduling the transmission is a first value; and/or,
the second transmission includes: transmission with a second network node, or transmission in which a coreset pool index associated with the transmission is a second value, or transmission in which a coreset pool index of a control resource set of a control channel for scheduling the transmission is a second value.

Optionally, the method further includes:
obtaining the first timing advance and/or the second timing advance;
wherein the first timing advance is a timing advance for the user equipment to perform the first transmission with the first timing;
the second timing advance is a timing advance for the user equipment to perform the second transmission with the second timing.

Optionally, the method further includes:
obtaining the third timing advance and/or the fourth timing advance according to the first timing advance and the second timing advance.

Optionally, the method further includes:
obtaining a first time difference;
wherein the first time difference includes:
an arrival time difference of downlink signals or channels of the first network node and the second network node; or,
a time difference between the first timing and the second timing; or,
an arrival or reception time difference between the first transmission and the second transmission.

Optionally, the obtaining the third timing advance and/or the fourth timing advance according to the first timing advance and the second timing advance, includes:
obtaining the fourth timing advance based on the first timing advance and the first time difference, and/or
obtaining the third timing advance based on the second timing advance and the first time difference.

Optionally, the method further includes:
sending a second timing advance or a timing advance difference to the first network node, wherein the timing advance difference is a difference between the first timing advance and the second timing advance.

Optionally, the method further includes:
receiving or obtaining the third timing advance and/or the fourth timing advance configured or indicated by the first network node.

Optionally, the method further includes:
obtaining the first time difference;
sending the first time difference to the first network node;
wherein the first time difference includes:
an arrival time difference of downlink signals or channels of the first network node and the second network node; or,
a time difference between the first timing and the second timing; or,
an arrival or reception time difference between the first transmission and the second transmission.

In a second aspect, one embodiment of the present disclosure provides an uplink transmission method, applied to a first network node, including:
sending a third timing advance and/or a fourth timing advance to a user equipment (UE);
wherein the third timing advance is a timing advance for the user equipment to perform a second transmission with a first timing;
the fourth timing advance is a timing advance for the user equipment to perform a first transmission with a second timing.

Optionally, the first timing is a timing of the first network node, or reception time or reception timing of the user equipment to the first network node;
the second timing is a timing of a second network node, or reception time or reception timing of the user equipment to the second network node.

Optionally, the first transmission includes: transmission with the first network node, or transmission in which a coreset pool index associated with the transmission is a first value, or transmission in which a coreset pool index of a control resource set of a control channel for scheduling the transmission is a first value; and/or,
the second transmission includes: transmission with a second network node, or transmission in which a coreset pool index associated with the transmission is a second value, or transmission in which a coreset pool index of a control resource set of a control channel for scheduling the transmission is a second value.

Optionally, the method further includes:
receiving a second timing advance; or,
receiving a timing advance difference, wherein the timing advance difference is a difference between the first timing advance and the second timing advance;
wherein the second timing advance and/or the timing advance difference value are sent by the second network node or the user equipment.

Optionally, the first timing advance is a timing advance for the user equipment to perform the first transmission with the first timing;
the second timing advance is a timing advance for the user equipment to perform the second transmission with the second timing.

Optionally, the method further includes:
receiving a first time difference reported by the user equipment;
wherein the first time difference includes:
an arrival time difference of the downlink signal or channel of the first network node and the second network node; or,
a time difference between the first timing and the second timing; or,
a difference in arrival time between the first transmission and the second transmission.

Optionally, the third timing advance and/or the fourth timing advance are obtained by the first network node according to configuration of the first time difference, the first timing advance and the second timing advance.

Optionally, the method further includes:
indicating a timing advance update to the user equipment for the user equipment updating the third timing advance and/or the fourth timing advance.

In a third aspect, one embodiment of the present disclosure provides an uplink transmission device, applied to a user equipment (UE), includes:
a first module used to determine timing advance based on timing and/or network nodes;
a second module used to perform uplink transmission with the network nodes according to the timing advance.

Optionally, when a preceding transmission is a first transmission, the timing is the first timing; or
when a preceding transmission is a second transmission, the timing is the second timing; or
when receiving a downlink scheduling or downlink control information indication or uplink grant sent by the first network node, the timing is the first timing; or,
when receiving a downlink scheduling or downlink control information indication or uplink grant sent by the second network node, the timing is the second timing.

Optionally, the first timing is the timing of the first network node, or reception time or reception timing of the user equipment to the first network node; the second timing is the timing of the second network node, or reception time or reception timing of the user equipment to the second network node.

Optionally, the first transmission includes: transmission with the first network node, or transmission in which a coreset pool index associated with the transmission is a first value, or transmission in which a coreset pool index of a control resource set of a control channel for scheduling the transmission is a first value; and/or,
the second transmission includes: transmission with a second network node, or transmission in which a coreset pool index associated with the transmission is a second value, or transmission in which a coreset pool index of a control resource set of a control channel for scheduling the transmission is a second value.

Optionally, uplink transmission with the network node is replaced by:
transmission of a coreset pool index associated with the uplink transmission, or transmission of a coreset pool index of a Control Resource Set of a control channel for scheduling transmission.

Optionally, the first module is further used to determine the timing advance being a third timing advance when the timing is the first timing and the second transmission is performed; or, determine the timing advance being a fourth timing advance when the timing is the second timing and the first transmission is performed;
where the first transmission includes: transmission with the first network node, or transmission in which a coreset pool index associated with the transmission is a first value, or transmission in which a coreset pool index of a control resource set of a control channel for scheduling the transmission is a first value; and/or,
the second transmission includes: transmission with a second network node, or transmission in which a coreset pool index associated with the transmission is a second value, or transmission in which a coreset pool index of a control resource set of a control channel for scheduling the transmission is a second value.

Optionally, the uplink transmission device further includes:
a third module used to obtain the first timing advance and/or the second timing advance;
where the first timing advance is a timing advance for the user equipment to perform the first transmission with the first timing;
the second timing advance is a timing advance for the user equipment to perform the second transmission with the second timing.

Optionally, the uplink transmission device further includes:
a fourth module used to obtain the third timing advance and/or the fourth timing advance according to the first timing advance and the second timing advance.

Optionally, the uplink transmission device further includes:
a fifth module used to obtain a first time difference;
where the first time difference includes:
an arrival time difference of downlink signals or channels of the first network node and the second network node; or,
a time difference between the first timing and the second timing; or,
an arrival or reception time difference between the first transmission and the second transmission.

Optionally, the fourth module is further used to obtain the fourth timing advance based on the first timing advance and the first time difference, and/or obtain the third timing advance based on the second timing advance and the first time difference.

Optionally, the uplink transmission device further includes:
a sixth module used to send a second timing advance or a timing advance difference to the first network node, where the timing advance difference is a difference between the first timing advance and the second timing advance.

Optionally, the uplink transmission device further includes:
a seventh module used to receive or obtain the third timing advance and/or the fourth timing advance configured or indicated by the first network node.

Optionally, the uplink transmission device further includes:
an eighth module used to obtain the first time difference and send the first time difference to the first network node;
where the first time difference includes:
an arrival time difference of downlink signals or channels of the first network node and the second network node; or,
a time difference between the first timing and the second timing; or,
an arrival or reception time difference between the first transmission and the second transmission.

In a fourth aspect, one embodiment of the present disclosure provides an uplink transmission device, applied to a first network node, including:
a first module used to send a third timing advance and/or a fourth timing advance to a user equipment (UE);
wherein the third timing advance is a timing advance for the user equipment to perform a second transmission with a first timing;
the fourth timing advance is a timing advance for the user equipment to perform a first transmission with a second timing.

Optionally, the first timing is the timing of the first network node, or reception time or reception timing of the user equipment to the first network node; the second timing is the timing of the second network node, or reception time or reception timing of the user equipment to the second network node.

Optionally, the first transmission includes: transmission with the first network node, or transmission in which a coreset pool index associated with the transmission is a first value, or transmission in which a coreset pool index of a control resource set of a control channel for scheduling the transmission is a first value; and/or,
the second transmission includes: transmission with a second network node, or transmission in which a coreset pool index associated with the transmission is a second value, or transmission in which a coreset pool index of a control resource set of a control channel for scheduling the transmission is a second value.

Optionally, the uplink transmission device further includes:
a second module used to receive a second timing advance; or, receive a timing advance difference, where the timing advance difference is a difference between the first timing advance and the second timing advance;
where the second timing advance and/or the timing advance difference value are sent by the second network node or the user equipment.

Optionally, the first timing advance is a timing advance for the user equipment to perform the first transmission with the first timing;
the second timing advance is a timing advance for the user equipment to perform the second transmission with the second timing.

Optionally, the second module is further used to receive a first time difference reported by the user equipment;
where the first time difference includes:
an arrival time difference of the downlink signal or channel of the first network node and the second network node; or,
a time difference between the first timing and the second timing; or,
a difference in arrival time between the first transmission and the second transmission.

Optionally, the third timing advance and/or the fourth timing advance are obtained by the first network node according to configuration of the first time difference, the first timing advance and the second timing advance.

Optionally, the first module is further used to indicate a timing advance update to the user equipment, so that the user equipment can update the third timing advance and/or the fourth timing advance.

In a fifth aspect, one embodiment of the present disclosure provides an uplink transmission system, including: a user equipment (UE) and network nodes; wherein the network nodes include: a first network node and a second network node;
the user equipment is used to determine timing advance based on timing and/or network nodes, and perform uplink transmission with the network nodes according to the timing advance.

Optionally, when a preceding transmission is a first transmission, the timing is the first timing; or
when a preceding transmission is a second transmission, the timing is the second timing; or
when receiving a downlink scheduling or downlink control information indication or uplink grant sent by the first network node, the timing is the first timing; or,
when receiving a downlink scheduling or downlink control information indication or uplink grant sent by the second network node, the timing is the second timing.

Optionally, the first timing is the timing of the first network node, or reception time or reception timing of the user equipment to the first network node; the second timing may be the timing of the second network node, or reception time or reception timing of the user equipment to the second network node.

Optionally, the first transmission includes: transmission with the first network node, or transmission in which a coreset pool index associated with the transmission is a first value, or transmission in which a coreset pool index of a control resource set of a control channel for scheduling the transmission is a first value; and/or,
the second transmission includes: transmission with a second network node, or transmission in which a coreset pool index associated with the transmission is a second value, or transmission in which a coreset pool index of a control resource set of a control channel for scheduling the transmission is a second value.

Optionally, uplink transmission with the network node is replaced by:
transmission of a coreset pool index associated with the uplink transmission, or transmission of a coreset pool index of a Control Resource Set of a control channel for scheduling transmission.

Optionally, the user equipment is further used to determine the timing advance being a third timing advance when the timing is the first timing and the second transmission is performed; or, determine the timing advance being a fourth timing advance when the timing is the second timing and the first transmission is performed;
where the first transmission includes: transmission with the first network node, or transmission in which a coreset pool index associated with the transmission is a first value, or transmission in which a coreset pool index of a control resource set of a control channel for scheduling the transmission is a first value; and/or,
the second transmission includes: transmission with a second network node, or transmission in which a coreset pool index associated with the transmission is a second value, or transmission in which a coreset pool index of a control resource set of a control channel for scheduling the transmission is a second value.

Optionally, the user equipment is further used to obtain the first timing advance and/or the second timing advance;
where the first timing advance is a timing advance for the user equipment to perform the first transmission with the first timing;
the second timing advance is a timing advance for the user equipment to perform the second transmission with the second timing.

Optionally, the user equipment is further used to obtain the third timing advance and/or the fourth timing advance according to the first timing advance and the second timing advance.

Optionally, the user equipment is further used to obtain a first time difference;
where the first time difference includes:
an arrival time difference of downlink signals or channels of the first network node and the second network node; or,
a time difference between the first timing and the second timing; or,
an arrival or reception time difference between the first transmission and the second transmission.

Optionally, the user equipment is further used to obtain the fourth timing advance based on the first timing advance and the first time difference, and/or obtain the fourth timing advance based on the second timing advance and the first time difference.

Optionally, the user equipment is further used to send a second timing advance or a timing advance difference to the first network node, where the timing advance difference is a difference between the first timing advance and the second timing advance.

The first network node is used to receive the second timing advance or the timing advance difference.

Optionally, the first network node is further used to receive a second timing advance or a timing advance difference from the second network node, where the timing advance difference is a difference between the first timing advance and the second timing advance.

The second network node is further used to send the second timing advance or the timing advance difference to the first network node.

Optionally, the user equipment is further used to receive or obtain the third timing advance and/or the fourth timing advance configured or indicated by the first network node.

The first network node is further used to configure or indicate the third timing advance and/or the fourth timing advance.

Optionally, the user equipment is further used to obtain a first time difference, and send the first time difference to the first network node.

The first network node is further used to receive the first time difference;
wherein the first time difference includes:
an arrival time difference of downlink signals or channels of the first network node and the second network node; or,
a time difference between the first timing and the second timing; or,
an arrival or reception time difference between the first transmission and the second transmission.

Optionally, the third timing advance and/or the fourth timing advance are obtained by the first network node according to configuration of the first time difference, the first timing advance and the second timing advance.

Optionally, the first network node is further used to indicate a timing advance update to the user equipment.

The user equipment is further used to update the third timing advance and/or the fourth timing advance according to the indication of the first network node.

In a sixth aspect, one embodiment of the present disclosure provides an uplink transmission device, applied to a user equipment (UE), including: a processor and a transceiver;
wherein the processor is used to determine timing advance based on timing and/or network nodes;
the transceiver is used to perform uplink transmission with the network nodes according to the timing advance.

Optionally, when a preceding transmission is a first transmission, the timing is the first timing; or
when a preceding transmission is a second transmission, the timing is the second timing; or
when receiving a downlink scheduling or downlink control information indication or uplink grant sent by the first network node, the timing is the first timing; or,
when receiving a downlink scheduling or downlink control information indication or uplink grant sent by the second network node, the timing is the second timing.

Optionally, the first timing is the timing of the first network node, or reception time or reception timing of the user equipment to the first network node; the second timing is the timing of the second network node, or reception time or reception timing of the user equipment to the second network node.

Optionally, the first transmission includes: transmission with the first network node, or transmission in which a coreset pool index associated with the transmission is a first value, or transmission in which a coreset pool index of a control resource set of a control channel for scheduling the transmission is a first value; and/or,
the second transmission includes: transmission with a second network node, or transmission in which a coreset pool index associated with the transmission is a second value, or transmission in which a coreset pool index of a control resource set of a control channel for scheduling the transmission is a second value.

Optionally, uplink transmission with the network node is replaced by:
transmission of a coreset pool index associated with the uplink transmission, or transmission of a coreset pool index of a Control Resource Set of a control channel for scheduling transmission.

Optionally, the processor is further used to determine the timing advance being a third timing advance when the timing is the first timing and the second transmission is performed; or, determine the timing advance being a fourth timing advance when the timing is the second timing and the first transmission is performed;
where the first transmission includes: transmission with the first network node, or transmission in which a coreset pool index associated with the transmission is a first value, or transmission in which a coreset pool index of a control resource set of a control channel for scheduling the transmission is a first value; and/or,
the second transmission includes: transmission with a second network node, or transmission in which a coreset pool index associated with the transmission is a second value, or transmission in which a coreset pool index of a control resource set of a control channel for scheduling the transmission is a second value.

Optionally, the transceiver is further used to obtain the first timing advance and/or the second timing advance;
where the first timing advance is a timing advance for the user equipment to perform the first transmission with the first timing;
the second timing advance is a timing advance for the user equipment to perform the second transmission with the second timing.

Optionally, the processor is further used to obtain the third timing advance and/or the fourth timing advance according to the first timing advance and the second timing advance.

Optionally, the processor is further used to obtain the first time difference;
where the first time difference includes:
an arrival time difference of downlink signals or channels of the first network node and the second network node; or,
a time difference between the first timing and the second timing; or,
an arrival or reception time difference between the first transmission and the second transmission.

Optionally, the processor is further used to obtain the fourth timing advance based on the first timing advance and the first time difference, and/or obtain the third timing advance based on the second timing advance and the first time difference.

Optionally, the transceiver is further used to send a second timing advance or a timing advance difference to the first network node, where the timing advance difference is a difference between the first timing advance and the second timing advance.

Optionally, the transceiver is further used to receive or obtain the third timing advance and/or the fourth timing advance configured or indicated by the first network node.

Optionally, the processor is further used to obtain the first time difference.

The transceiver is further used to send the first time difference to the first network node;
wherein the first time difference includes:
an arrival time difference of downlink signals or channels of the first network node and the second network node; or,
a time difference between the first timing and the second timing; or,
an arrival or reception time difference between the first transmission and the second transmission.

In a seventh aspect, one embodiment of the present disclosure provides an uplink transmission device, applied to a first network node, including: a transceiver;
wherein the transceiver is used to send a third timing advance and/or a fourth timing advance to a user equipment (UE);
wherein the third timing advance is a timing advance for the user equipment to perform a second transmission with a first timing;
the fourth timing advance is a timing advance for the user equipment to perform a first transmission with a second timing.

Optionally, the first timing is the timing of the first network node, or reception time or reception timing of the user equipment to the first network node; the second timing may be the timing of the second network node, or reception time or reception timing of the user equipment to the second network node.

Optionally, the first transmission includes: transmission with the first network node, or transmission in which a coreset pool index associated with the transmission is a first value, or transmission in which a coreset pool index of a control resource set of a control channel for scheduling the transmission is a first value; and/or,
the second transmission includes: transmission with a second network node, or transmission in which a coreset pool index associated with the transmission is a second value, or transmission in which a coreset pool index of a control resource set of a control channel for scheduling the transmission is a second value.

Optionally, the transceiver is further used to receive a second timing advance; or, receive a timing advance difference, where the timing advance difference is a difference between the first timing advance and the second timing advance;
where the second timing advance and/or the timing advance difference value are sent by the second network node or the user equipment.

Optionally, the first timing advance is a timing advance for the user equipment to perform the first transmission with the first timing;
the second timing advance is a timing advance for the user equipment to perform the second transmission with the second timing.

Optionally, the transceiver is further used to receive a first time difference reported by the user equipment;
where the first time difference includes:
an arrival time difference of the downlink signal or channel of the first network node and the second network node; or,
a time difference between the first timing and the second timing; or,
a difference in arrival time between the first transmission and the second transmission.

Optionally, the transceiver is further used to indicate a timing advance update to the user equipment, so that the user equipment can update the third timing advance and/or the fourth timing advance.

In an eighth aspect, one embodiment of the present disclosure provides a communication equipment, including: a transceiver, a memory, a processor, and a program stored in the memory and executable on the processor;
wherein the processor is used to read the program in the memory to perform steps in the above uplink transmission method.

In a ninth aspect, one embodiment of the present disclosure provides a readable storage medium, including a program stored thereon; wherein the program, when executed by a processor, causes the processor to perform steps in the above uplink transmission method.

In the embodiments of the present disclosure, the user equipment can determine the corresponding timing advance according to the timing and/or network nodes, thereby solving the problem that uplink transmission may not be correctly received due to the fact that only the same timing advance can be used for uplink transmission when the user equipment switches transmission between multiple different network nodes in the related art. With the technical solution provided in this embodiment, the user equipment can determine different timing advances for different transmission scenarios, and perform uplink transmission according to the determined timing advance, so that the uplink transmission can be received correctly, thereby improving the reliability of uplink transmission. In addition, since the first network node can send the third timing advance and/or the fourth timing advance to the user equipment, the user equipment can obtain multiple different timing advances, thereby ensuring feasibility of the user equipment determining the timing advance based on the timing and/or the network node.

### BRIEF DESCRIPTION OF THE DRAWINGS

FIG. 1 is a schematic diagram of a multi-TRP scenario provided in the related art;
FIG. 2 is a first flowchart of an uplink transmission method according to an embodiment of the present disclosure;
FIG. 3 is a schematic diagram of a method for determining a timing advance in the uplink transmission method shown in FIG. 2 according to an embodiment of the present disclosure;
FIG. 4 is a first schematic diagram of a scenario in which UE adopts TA12 for uplink communication in the uplink transmission method shown in FIG. 2 according to an embodiment of the present disclosure;
FIG. 5 is a second schematic diagram of a scenario in which UE adopts TA12 for uplink communication in the uplink transmission method shown in FIG. 2 according to an embodiment of the present disclosure;
FIG. 6 is a third schematic diagram of a scenario in which UE adopts TA12 for uplink communication in the uplink transmission method shown in FIG. 2 according to an embodiment of the present disclosure;
FIG. 7 is a fourth schematic diagram of a scenario in which UE adopts TA12 for uplink communication in the uplink transmission method shown in FIG. 2 according to an embodiment of the present disclosure;
FIG. 8 is a fifth schematic diagram of a scenario in which UE adopts TA12 for uplink communication in the uplink transmission method shown in FIG. 2 according to an embodiment of the present disclosure;
FIG. 9 is a second flowchart of an uplink transmission method according to an embodiment of the present disclosure;
FIG. 10 is a third flowchart of an uplink transmission method according to an embodiment of the present disclosure;
FIG. 11 is a fifth flowchart of an uplink transmission method according to an embodiment of the present disclosure;
FIG. 12 is a first schematic diagram of an uplink transmission device according to an embodiment of the present disclosure;
FIG. 13 is a second schematic diagram of an uplink transmission device according to an embodiment of the present disclosure;
FIG. 14 is a schematic diagram of an uplink transmission system according to an embodiment of the present disclosure;
FIG. 15 is a third schematic diagram of an uplink transmission device according to an embodiment of the present disclosure; and
FIG. 16 is a fourth schematic diagram of an uplink transmission device according to an embodiment of the present disclosure.

### DETAILED DESCRIPTION

The terms "and/or" in the embodiments of the present disclosure are used to describe association relationship between associated objects, and indicate that there may be three relationships, for example, A and/or B means there are three situations, i.e., there is A alone, there are both of A and B, or, there is B alone. The character "/" generally means that relationship between associated objects before and after the character "/" is "or".

The term "plurality" in the embodiments of the present disclosure means two or more, and other quantifiers are similar.

The technical solutions in the embodiments of the present disclosure will be described hereinafter in a clear and complete manner in conjunction with the accompanying drawings of the embodiments of the present disclosure. Obviously, the following embodiments are merely a part of, rather than all of, the embodiments of the present disclosure, and based on these embodiments, a person skilled in the art may obtain the other embodiments, which also fall within the scope of the present disclosure.

Referring to FIG. 2, FIG. 2 is a flowchart of an uplink transmission method according to an embodiment of the present disclosure. This uplink transmission method can be applied to user equipment (UE). As shown in FIG. 2, the method includes the following steps.

Step 201: determining timing advance based on timing and/or network nodes.

It is to be noted that this embodiment does not limit the network node. In actual application, the network node may be a TRP, a base station, or other network entities with communication functions. For ease of understanding, in this embodiment and the following embodiments, the network node being a TRP is taken as an example for explanation.

In a multi-transmission scenario, such as a multi-TRP (MTRP) scenario, a user equipment (UE) can communicate with only one network node, for example, the user equipment can communicate with only TRP#1, or only with TRP #2. The UE can also switch communication between any two network nodes. For example, the UE can communicate with TRP#2 after communicating with TRP#1, or the UE can communicate with TRP#1 after communicating with TRP#2.

In order to enable the technical solution provided in the embodiment of the present disclosure applicable to a situation where the user equipment switches communication between any two network nodes in a multi-transmission scenario, the network node in this embodiment may at least include: a first network node and second network node. For ease of understanding, in this embodiment and the following embodiments, the first network node may be TRP#1, and the second network node may be TRP#2.

In this embodiment, the timing may include a first timing and a second timing.

Specifically, when a preceding transmission is a first transmission, the timing is the first timing; or when a preceding transmission is a second transmission, the timing is the second timing; or when receiving a downlink scheduling or downlink control information indication or uplink grant sent by the first network node, the timing is the first timing; or, when receiving a downlink scheduling or downlink control information indication or uplink grant sent by the second network node, the timing is the second timing. In this embodiment, the preceding transmission is specifically a previous transmission adjacent to the uplink transmission in the step 202, and this transmission can be an uplink transmission or a downlink transmission.

Alternatively, the first timing may be the timing of the first network node, or reception time or reception timing of the user equipment to the first network node; the second timing may be the timing of the second network node, or reception time or reception timing of the user equipment to the second network node.

In this embodiment, the first transmission may include: transmission with the first network node, or transmission in which a coreset pool index associated with the transmission is a first value, or transmission in which a coreset pool index of a control resource set of a control channel for scheduling the transmission is a first value; and/or, the second transmission may include: transmission with a second network node, or transmission in which a coreset pool index associated with the transmission is a second value, or transmission in which a coreset pool index of a control resource set of a control channel for scheduling the transmission is a second value. The coreset refers to a control resource set. It is to be noted that the first transmission and the second transmission in this embodiment may be uplink transmission and/or downlink transmission.

In this embodiment, the step 201 may specifically include the following.

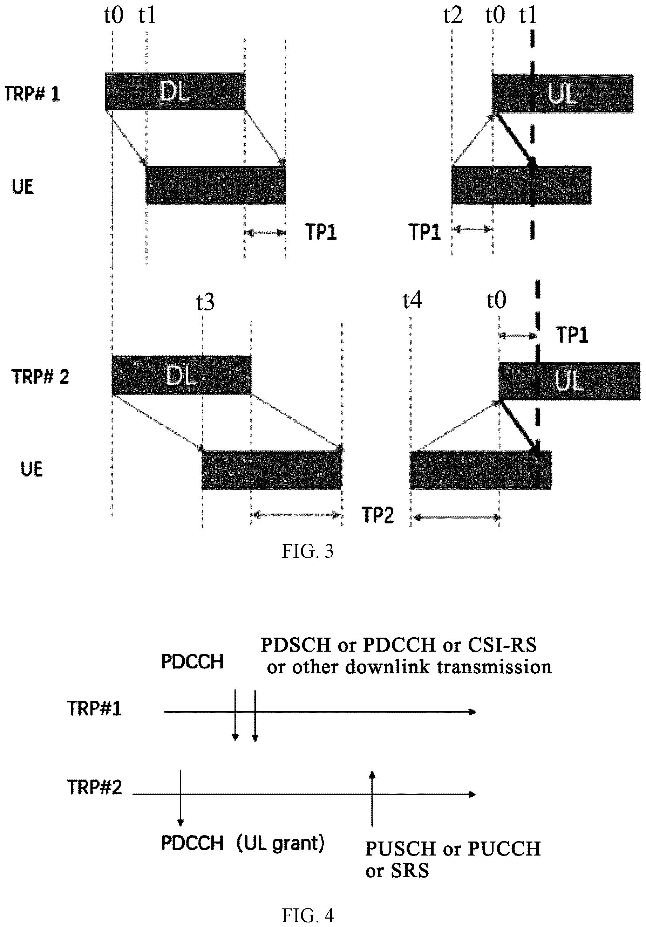

When the timing is the first timing and the first transmission is performed, it is determined that the timing advance is the first timing advance. Specifically, for example, as shown in FIG. 3, after the UE performs downlink (DL) transmission with TRP#1, the UE performs uplink (UL) transmission with TRP#1. At this point, the first timing is t1, and the first transmission is uplink transmission between the UE and TRP#1, then, the first timing advance TA1 is twice a first propagation delay (TP), that is, TA1=2TP1.

Alternatively, when the timing is the second timing and the second transmission is performed, it is determined that the timing advance is the second timing advance. For example, as shown in FIG. 3, after the UE performs downlink transmission (DL) with TRP#2, the UE performs uplink transmission (UL) with TRP#2 (not shown). At this point, the second timing is t3, and the second transmission is uplink transmission between the UE and TRP#2 (not shown), then, the second timing advance TA2 is obtained in the same way as TA1, and the second timing advance TA2=2TP2.

Alternatively, when the timing is the first timing and the second transmission is performed, it is determined that the timing advance is a third timing advance. For example, as shown in FIG. 3, after the UE performs downlink (DL) transmission with TRP#1, the UE performs uplink (UL) transmission with TRP#2. At this point, the first timing is t1, and the second transmission is the uplink transmission between the UE and TRP#2, then the third timing advance TA12=TP1+TP2.

Alternatively, when the timing is the second timing and the first transmission is performed, it is determined that the timing advance is a fourth timing advance. For example, as shown in FIG. 3, after the UE performs downlink (DL) transmission with TRP#2, the UE performs uplink (UL) transmission with TRP#1 (not shown). At this point, the second timing is t3, and the second transmission is uplink (UL) transmission between the UE and TRP#1 (not shown), then the fourth timing advance is TA21=TP1+TP2.

It is to be noted that the above is an exemplary description of a method for obtaining specific values of the first timing advance, the second timing advance, the third timing advance, and the fourth timing advance. In actual use, the values of the above four timing advances may also be determined by other methods, which will not be elaborated here.

Since the third timing advance and the fourth timing advance are timing advances required when the UE switches between the first network node and the second network node, in order to enable those skilled in the art to have a clearer understanding of the third timing advance and the fourth timing advance, the third timing advance is explained hereinafter with different application scenarios as examples. The principle of the fourth timing advance is the same as that of the third timing advance and will not be repeated here.

### Scenario one

As shown in FIG. 4, transmission of uplink physical uplink shared channel (PUSCH) or other uplink transmission such as sounding reference signal (SRS), physical uplink control channel (PUCCH), etc., between the UE and TRP#2, are transmitted after transmission of Physical downlink shared channel (PDSCH) between the UE and TRP#1. After the UE performs downlink transmission with TRP#1, the UE needs to refer to the timing of TRP#1, or use the timing of TRP#1 as a reference. When the UE performs transmission with TRP#2, the UE still uses the timing of TRP#1 as a reference and needs to use TA12 for uplink transmission.

### Scenario two

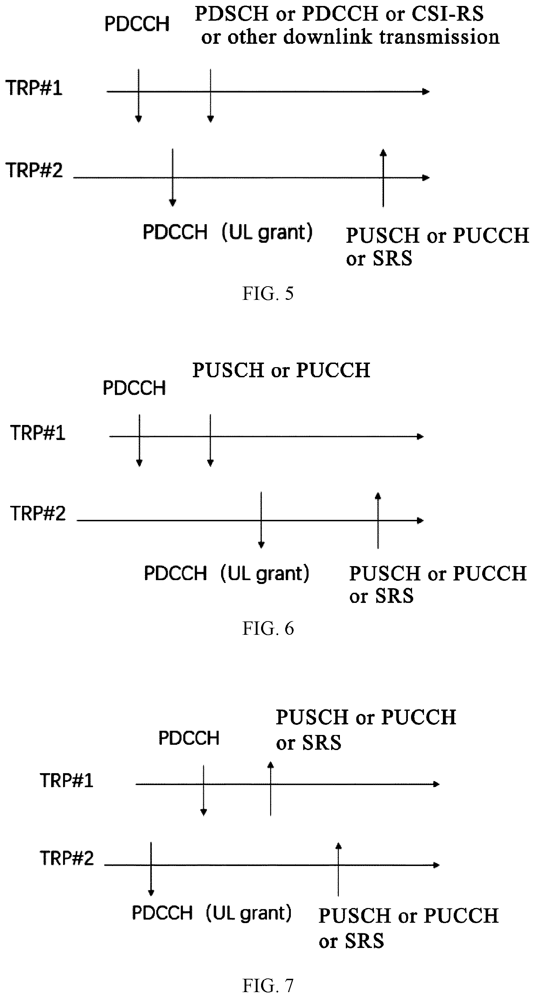

As shown in FIG. 5, an uplink transmission between the UE and TRP#2 follows PDSCH transmission between the UE and TRP#1. When the UE performs uplink transmission with TRP#2, the UE needs to refer to the timing of TRP#1 or takes an arrival time of a downlink signal of TRP#1 as a reference, and then the UE needs to use TA12 for uplink transmission.

### Scenario three

As shown in FIG. 6, although uplink transmission of PUSCH between UE and TRP#2 is after transmission of PDSCH or Physical Downlink Control Channel (PDCCH) between the UE and TRP#1, the transmission closest to the PUSCH is uplink scheduling PDCCH of TRP#2, at this point, the UE can continue to use the timing of TRP#2, or use the timing of TRP#2 as a reference, and thus the UE can still use TA2 for uplink transmission, and does not need to use TA12 for uplink transmission.

### Scenario four

As shown in FIG. 7, uplink transmission of PUSCH between the UE and TRP#2 is after transmission of PUSCH between the UE and TRP#1, then the UE needs to use the timing of TRP#1 as a reference and needs to use TA12 for uplink transmission.

### Scenario five

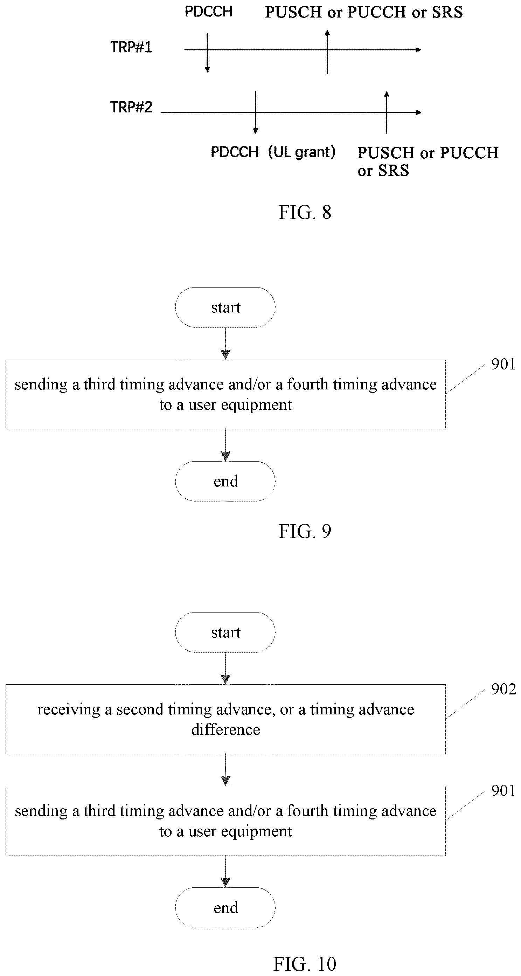

As shown in FIG. 8, before the UE performs uplink transmission with TRP#2, the UE performs uplink transmission of PUSCH with TRP#1. Therefore, the UE needs to refer to the timing of TRP#1, or a timing reference, and the UE needs to use TA12 for uplink transmission.

This embodiment does not limit the method of obtaining any one or more of the first timing advance, the second timing advance, the third timing advance, and the fourth timing advance. In the actual use process, the user equipment sets any one or more of the first timing advance, the second timing advance, the third timing advance and the fourth timing advance according to actual transmission requirements, and may also obtain them from other network nodes.

In the case where the user equipment obtains the timing advance from other network nodes, the technical solution provided in this embodiment may further include a step of obtaining the first timing advance and/or the second timing advance. Specifically, the first timing advance can be obtained from the first network node, and/or the second timing advance can be obtained from the second network node; or the first timing advance and/or the second timing advance can be obtained from the first network node; or, the first timing advance and/or the second timing advance, etc. may be obtained from the second network node, which will not be described here.

If the user equipment learns the first timing advance and the second timing advance in advance, the technical solution provided in this embodiment may further include obtaining the third timing advance and/or the fourth timing advance based on the first timing advance and the second timing advance. At this point, the third timing advance may be specifically TA12=TP1+TP2 as described above, and the fourth timing advance may be specifically TA21=TP1+TP2 as described above.

With the technical solution provided in the embodiments of the present disclosure, the user equipment can obtain different timing advances configured for it from different network nodes, so that when the UE performs uplink transmission, the user equipment can select the corresponding timing advance according to the actual transmission scenario, thereby solving the problem that uplink transmission may not be correctly received due to the fact that only the same timing advance can be used for uplink transmission in the related art. In addition, when the UE learns the first timing advance and the second timing advance in advance, the UE can obtain the third timing advance and/or the fourth timing advance according to the first timing advance and the second timing advance, so that the UE has the ability to obtain the timing advance by itself, thereby solving the problem that the timing advance can only be configured by the network node in the related art and the user equipment cannot perform normal uplink transmission when the network node does not send the timing advance to the user equipment.

In order to solve the problem of synchronization error (Delta) between different network nodes in the related art, the technical solution provided in the embodiment of the present disclosure may further include a step of obtaining a first time difference (offset). The first time difference includes: an arrival time difference of downlink signals or channels of the first network node and the second network node; or a time difference between the first timing and the second timing; or an arrival or reception time difference of the first transmission and the second transmission. Since the first time difference can indirectly reflect the synchronization error (Delta) between the first network node and the second network node, the technical solution provided in the embodiment of the present disclosure can determine the synchronization error (Delta) between the first network node and the second network node by taking the first time difference.

Further, in the case where there is a synchronization error between the first network node and the second network node, the above step of obtaining third timing advance and/or fourth timing advance based on the first timing advance and the second timing advance, may include:
according to the first timing advance and the first time difference, obtaining the fourth timing advance; wherein in this embodiment, the fourth timing advance is TA21=TA1+offset;
and/or, obtaining the third timing advance based on the second timing advance and the first time difference; where in this embodiment, the third timing advance is TA12=TA2-offset.

The technical solution provided in this embodiment may further include a step of sending a second timing advance or a timing advance difference to the first network node. The timing advance difference is a difference between the first timing advance and the second timing advance.

By sending the second timing advance or the timing advance difference to the first network node, the first network node can have the ability to configure the third timing advance and/or the fourth timing advance according to the first timing advance and the second timing advance, thereby solving the problem that a network node in the related art can only configure its own corresponding timing advance and cannot obtain or configure other timing advances.

Further, the technical solution provided in this embodiment may further include a step of receiving or obtaining the third timing advance and/or the fourth timing advance configured or indicated by the first network node.

Based on the above disclosed technical solution, in this embodiment, the third timing advance and/or the fourth timing advance can not only be configured by the UE itself, but also can be configured by the first network node, so that configuration method of the third timing advance and/or the fourth timing advance is more flexible.

Further, in the case where the third timing advance and/or the fourth timing advance are configured by the first network node, the technical solution provided in this embodiment may further include a step of sending the first time difference to the first network node. At this point, the first network node may further configure the third timing advance and/or the fourth timing advance according to the first timing advance, the second timing advance, and the first time difference. The configuration process of the third timing advance and/or the fourth timing advance considers the impact of the synchronization error between the first network node and the second network node, thereby making the third timing advance and/or the fourth timing advance more reliable.

Step 202: performing uplink transmission with the network node according to the timing advance.

Specifically, when the timing advance is the first timing advance, uplink transmission is performed with the first network node. When the timing advance is the second timing advance, uplink transmission is performed with the second network node. When the timing advance is the third timing advance, uplink transmission is performed with the first network node. When the timing advance is the fourth timing advance, uplink transmission is performed with the second network node.

In this embodiment, uplink transmission with the network node can be replaced by:

transmission of a coreset pool index associated with the uplink transmission, or transmission of a coreset pool index of a Control Resource Set of a control channel for scheduling transmission.

In the embodiments of the present disclosure, the user equipment can determine the corresponding timing advance according to the timing and/or network nodes, thereby solving the problem that uplink transmission may not be correctly received due to the fact that only the same timing advance can be used for uplink transmission when the user equipment switches transmission between multiple different network nodes in the related art. With the technical solution provided in this embodiment, the user equipment can determine different timing advances for different transmission scenarios, and perform uplink transmission according to the determined timing advance, so that the uplink transmission can be received correctly, thereby improving the reliability of uplink transmission.

Referring to FIG. 9, FIG. 9 is a flow chart of an uplink transmission method according to an embodiment of the present disclosure. This uplink transmission method can be applied to a first network node, as shown in FIG. 9, the method includes the following steps.

Step 901: sending a third timing advance and/or a fourth timing advance to a user equipment (UE).

The third timing advance is a timing advance for the user equipment to perform a second transmission with first timing.

The fourth timing advance is a timing advance for the user equipment to perform a first transmission with second timing.

In this embodiment, the first timing is timing of the first network node, or reception time or reception timing of the user equipment to the first network node; the second timing may be the timing of the second network node, or reception time or reception timing of the user equipment to the second network node.

In this embodiment, the first transmission may include: transmission with the first network node, or transmission in which a coreset pool index associated with the transmission is a first value, or transmission in which a coreset pool index of a control resource set of a control channel for scheduling the transmission is a first value; and/or,
the second transmission may include: transmission with a second network node, or transmission in which a coreset pool index associated with the transmission is a second value, or transmission in which a coreset pool index of a control resource set of a control channel for scheduling the transmission is a second value. The coreset refers to a control resource set. It is to be noted that the first transmission and the second transmission in this embodiment may be uplink transmission and/or downlink transmission.

In order to enable the first network node to have the ability to configure the third timing advance and/or the fourth timing advance, as shown in FIG. 10, the uplink transmission method provided in this embodiment may further include:

Step 902: receiving a second timing advance, or a timing advance difference.

The timing advance difference is a difference between the first timing advance and the second timing advance.

The second timing advance and/or the timing advance difference are sent by the second network node or the user equipment.

In actual use, the step 902 may occur before the step 901 or after the step 901. This embodiment only takes the example that the step 902 occurs before the step 901 for description.

In this embodiment, the first timing advance is a timing advance for the user equipment to perform the first transmission with the first timing; the second timing advance is a timing advance for the user equipment to perform the second transmission with the second timing.

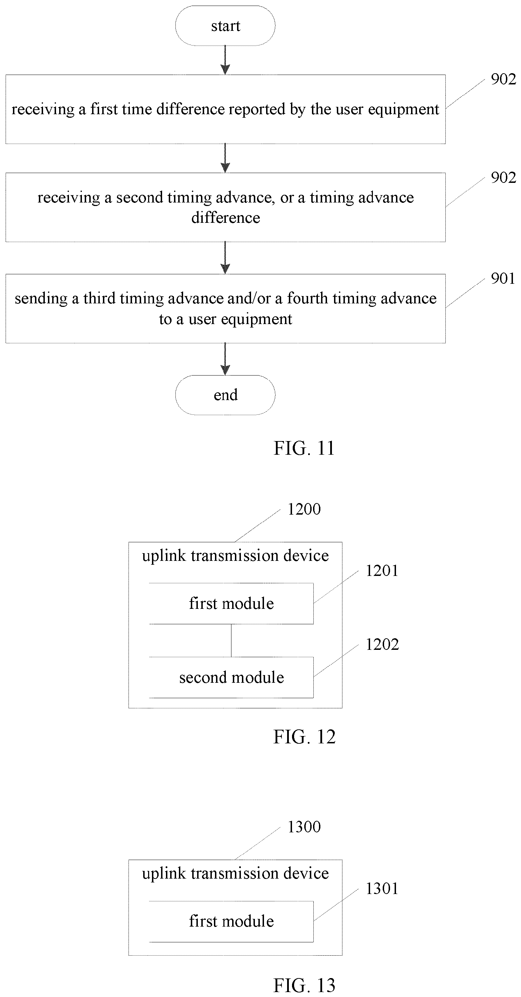

In order to enable the first network node to refer to the synchronization error factor between the first network node and the second network node when configuring the third timing advance and/or the fourth timing advance, as shown in FIG. 11, the uplink transmission method provided in this embodiment may further include:

Step 903: receiving a first time difference reported by the user equipment.

The first time difference includes: an arrival time difference of downlink signals or channels of the first network node and the second network node; or a time difference between the first timing and the second timing; or an arrival time difference between the first transmission and the second transmission.

In actual use, the step 903 can occur at any time. This embodiment only takes the step 903 occurring before the step 902 as an example for description.

Since the first network node can receive the first time difference, the third timing advance and/or the fourth timing advance can be obtained by the first network node according to configuration of the first time difference, the first timing advance and the second timing advance.

In order to improve the reliability of the timing advance configured on the user equipment, the uplink transmission method provided in this embodiment may also include a step of indicating a timing advance update to the user equipment, so that the user equipment updates the third timing advance and/or the fourth timing advance.

In the embodiment of the present disclosure, since the first network node can send the third timing advance and/or the fourth timing advance to the user equipment, the user equipment can obtain multiple different timing advances, thereby ensuring feasibility of the user equipment determining the timing advance based on the timing and/or the network node.

Referring to FIG. 12, FIG. 12 is a schematic diagram of an uplink transmission device according to an embodiment of the present disclosure. The uplink transmission device 1200 is applied to a user equipment (UE) and includes:
a first module 1201 used to determine timing advance according to timing and/or network nodes;
a second module 1202 used to perform uplink transmission with the network node according to the timing advance.

Optionally, when a preceding transmission is a first transmission, the timing is the first timing; or
when a preceding transmission is a second transmission, the timing is the second timing; or
when receiving a downlink scheduling or downlink control information indication or uplink grant sent by the first network node, the timing is the first timing; or,
when receiving a downlink scheduling or downlink control information indication or uplink grant sent by the second network node, the timing is the second timing.

Optionally, the first timing may be the timing of the first network node, or reception time or reception timing of the user equipment to the first network node; the second timing may be the timing of the second network node, or reception time or reception timing of the user equipment to the second network node.

Optionally, the first transmission includes: transmission with the first network node, or transmission in which a coreset pool index associated with the transmission is a first value, or transmission in which a coreset pool index of a control resource set of a control channel for scheduling the transmission is a first value; and/or,
the second transmission includes: transmission with a second network node, or transmission in which a coreset pool index associated with the transmission is a second value, or transmission in which a coreset pool index of a control resource set of a control channel for scheduling the transmission is a second value.

Optionally, uplink transmission with the network node can be replaced by:
transmission of a coreset pool index associated with the uplink transmission, or transmission of a coreset pool index of a Control Resource Set of a control channel for scheduling transmission.

Optionally, the first module is further used to determine the timing advance being a third timing advance when the timing is the first timing and the second transmission is performed; or, determine the timing advance being a fourth timing advance when the timing is the second timing and the first transmission is performed;
where the first transmission includes: transmission with the first network node, or transmission in which a coreset pool index associated with the transmission is a first value, or transmission in which a coreset pool index of a control resource set of a control channel for scheduling the transmission is a first value; and/or,
the second transmission includes: transmission with a second network node, or transmission in which a coreset pool index associated with the transmission is a second value, or transmission in which a coreset pool index of a control resource set of a control channel for scheduling the transmission is a second value.

Optionally, the uplink transmission device further includes:
a third module used to obtain the first timing advance and/or the second timing advance;
where the first timing advance is a timing advance for the user equipment to perform the first transmission with the first timing;
the second timing advance is a timing advance for the user equipment to perform the second transmission with the second timing.

Optionally, the uplink transmission device further includes:
a fourth module used to obtain the third timing advance and/or the fourth timing advance according to the first timing advance and the second timing advance.

Optionally, the uplink transmission device further includes:
a fifth module used to obtain a first time difference;
where the first time difference includes:
an arrival time difference of downlink signals or channels of the first network node and the second network node; or,
a time difference between the first timing and the second timing; or,
an arrival or reception time difference between the first transmission and the second transmission.

Optionally, the fourth module is further used to obtain the fourth timing advance based on the first timing advance and the first time difference, and/or obtain the third timing advance based on the second timing advance and the first time difference.

Optionally, the uplink transmission device further includes:
a sixth module used to send a second timing advance or a timing advance difference to the first network node, where the timing advance difference is a difference between the first timing advance and the second timing advance.

Optionally, the uplink transmission device further includes:
a seventh module used to receive or obtain the third timing advance and/or the fourth timing advance configured or indicated by the first network node.

Optionally, the uplink transmission device further includes:
an eighth module used to obtain the first time difference and send the first time difference to the first network node;
where the first time difference includes:
an arrival time difference of downlink signals or channels of the first network node and the second network node; or,
a time difference between the first timing and the second timing; or,
an arrival or reception time difference between the first transmission and the second transmission.

The specific implementation method of the uplink transmission device provided in this embodiment can be referred to the uplink transmission method provided in the embodiment of the present disclosure shown in the above FIG. 2, and will not be described again here.

In the embodiments of the present disclosure, the user equipment can determine the corresponding timing advance according to the timing and/or network nodes, thereby solving the problem that uplink transmission may not be correctly received due to the fact that only the same timing advance can be used for uplink transmission when the user equipment switches transmission between multiple different network nodes in the related art. With the technical solution provided in this embodiment, the user equipment can determine different timing advances for different transmission scenarios, and perform uplink transmission according to the determined timing advance, so that the uplink transmission can be received correctly, thereby improving the reliability of uplink transmission.

Referring to FIG. 13, FIG. 13 is a schematic diagram of an uplink transmission device according to an embodiment of the present disclosure. The uplink transmission device 1300 is applied to a first network node and includes:
a first module 1301 used to send a third timing advance and/or a fourth timing advance to a user equipment (UE);
where the third timing advance is a timing advance for the user equipment to perform a second transmission with the first timing;
the fourth timing advance is a timing advance for the user equipment to perform a first transmission with the second timing.

Optionally, the first timing may be the timing of the first network node, or reception time or reception timing of the user equipment to the first network node; the second timing may be the timing of the second network node, or reception time or reception timing of the user equipment to the second network node.

Optionally, the first transmission includes: transmission with the first network node, or transmission in which a coreset pool index associated with the transmission is a first value, or transmission in which a coreset pool index of a control resource set of a control channel for scheduling the transmission is a first value; and/or,
the second transmission includes: transmission with a second network node, or transmission in which a coreset pool index associated with the transmission is a second value, or transmission in which a coreset pool index of a control resource set of a control channel for scheduling the transmission is a second value.

Optionally, the uplink transmission device further includes:
a second module used to receive a second timing advance; or, receive a timing advance difference, where the timing advance difference is a difference between the first timing advance and the second timing advance;
where the second timing advance and/or the timing advance difference value are sent by the second network node or the user equipment.

Optionally, the first timing advance is a timing advance for the user equipment to perform the first transmission with the first timing;
the second timing advance is a timing advance for the user equipment to perform the second transmission with the second timing.

Optionally, the second module is further used to receive a first time difference reported by the user equipment;
where the first time difference includes:
an arrival time difference of the downlink signal or channel of the first network node and the second network node; or,
a time difference between the first timing and the second timing; or,
a difference in arrival time between the first transmission and the second transmission.

Optionally, the third timing advance and/or the fourth timing advance are obtained by the first network node according to configuration of the first time difference, the first timing advance and the second timing advance.

Optionally, the first module is further used to indicate a timing advance update to the user equipment, so that the user equipment can update the third timing advance and/or the fourth timing advance.

The implementation method of the uplink transmission device provided in this embodiment can refer to the uplink transmission method shown in above FIGs. 9-11, and will not be described again here.

In the embodiment of the present disclosure, since the first network node can send the third timing advance and/or the fourth timing advance to the user equipment, the user equipment can obtain multiple different timing advances, thereby ensuring feasibility of the user equipment determining the timing advance based on the timing and/or the network node.

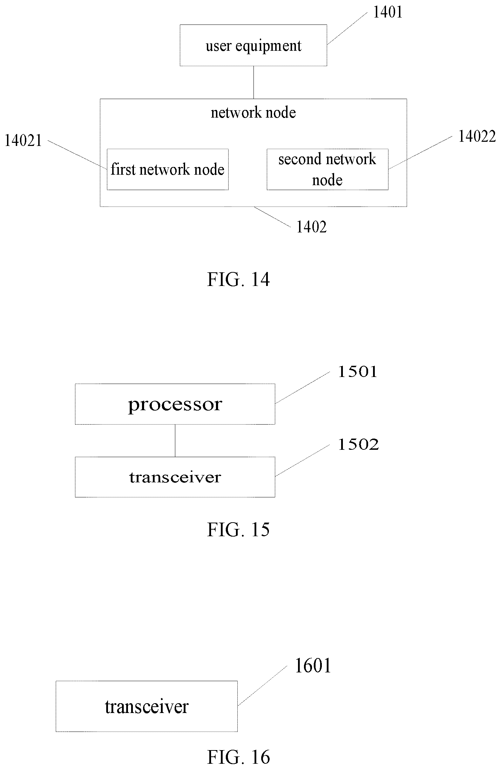

Referring to FIG. 14, FIG. 14 is a schematic diagram of an uplink transmission system provided in an embodiment of the present disclosure. The uplink transmission system includes: a user equipment (UE) 1401 and network nodes 1402. The network nodes 1402 include: a first network node 14021 and a second network node 14022.

The user equipment 1401 is used to determine timing advance based on timing and/or the network nodes, and perform uplink transmission with the network nodes based on the timing advance.

Optionally, when a preceding transmission is a first transmission, the timing is the first timing; or
when a preceding transmission is a second transmission, the timing is the second timing; or
when receiving a downlink scheduling or downlink control information indication or uplink grant sent by the first network node, the timing is the first timing; or,
when receiving a downlink scheduling or downlink control information indication or uplink grant sent by the second network node, the timing is the second timing.

Optionally, the first timing may be the timing of the first network node, or reception time or reception timing of the user equipment to the first network node; the second timing may be the timing of the second network node, or reception time or reception timing of the user equipment to the second network node.

Optionally, the first transmission includes: transmission with the first network node, or transmission in which a coreset pool index associated with the transmission is a first value, or transmission in which a coreset pool index of a control resource set of a control channel for scheduling the transmission is a first value; and/or,
the second transmission includes: transmission with a second network node, or transmission in which a coreset pool index associated with the transmission is a second value, or transmission in which a coreset pool index of a control resource set of a control channel for scheduling the transmission is a second value.

Optionally, uplink transmission with the network node can be replaced by:
transmission of a coreset pool index associated with the uplink transmission, or transmission of a coreset pool index of a Control Resource Set of a control channel for scheduling transmission.

Optionally, the user equipment 1401 is further used to determine the timing advance being a third timing advance when the timing is the first timing and the second transmission is performed; or, determine the timing advance being a fourth timing advance when the timing is the second timing and the first transmission is performed;
where the first transmission includes: transmission with the first network node, or transmission in which a coreset pool index associated with the transmission is a first value, or transmission in which a coreset pool index of a control resource set of a control channel for scheduling the transmission is a first value; and/or,
the second transmission includes: transmission with a second network node, or transmission in which a coreset pool index associated with the transmission is a second value, or transmission in which a coreset pool index of a control resource set of a control channel for scheduling the transmission is a second value.

Optionally, the user equipment 1401 is further used to obtain the first timing advance and/or the second timing advance;
where the first timing advance is a timing advance for the user equipment to perform the first transmission with the first timing;
the second timing advance is a timing advance for the user equipment to perform the second transmission with the second timing.

Optionally, the user equipment 1401 is further used to obtain the third timing advance and/or the fourth timing advance according to the first timing advance and the second timing advance.

Optionally, the user equipment 1401 is further used to obtain a first time difference;
where the first time difference includes:
an arrival time difference of downlink signals or channels of the first network node and the second network node; or,
a time difference between the first timing and the second timing; or,
an arrival or reception time difference between the first transmission and the second transmission.

Optionally, the user equipment 1401 is further used to obtain the fourth timing advance based on the first timing advance and the first time difference, and/or obtain the fourth timing advance based on the second timing advance and the first time difference.

Optionally, the user equipment 1401 is further used to send a second timing advance or a timing advance difference to the first network node, where the timing advance difference is a difference between the first timing advance and the second timing advance.

The first network node 14021 is used to receive the second timing advance or the timing advance difference.

Optionally, the first network node 14021 is further used to receive a second timing advance or a timing advance difference from the second network node, where the timing advance difference is a difference between the first timing advance and the second timing advance.

The second network node 14022 is further used to send the second timing advance or the timing advance difference to the first network node.

Optionally, the user equipment 1401 is further used to receive or obtain the third timing advance and/or the fourth timing advance configured or indicated by the first network node.

The first network node 14021 is further used to configure or indicate the third timing advance and/or the fourth timing advance.

Optionally, the user equipment 1401 is further used to obtain a first time difference, and send the first time difference to the first network node.

The first network node 14021 is further used to receive the first time difference;
wherein the first time difference includes:
an arrival time difference of downlink signals or channels of the first network node and the second network node; or,
a time difference between the first timing and the second timing; or,
an arrival or reception time difference between the first transmission and the second transmission.

Optionally, the third timing advance and/or the fourth timing advance are obtained by the first network node according to configuration of the first time difference, the first timing advance and the second timing advance.

Optionally, the first network node 14021 is further used to indicate a timing advance update to the user equipment.

The user equipment 1401 is further used to update the third timing advance and/or the fourth timing advance according to the indication of the first network node.

The specific implementation method of the uplink transmission system provided in this embodiment can refer to the above uplink transmission method, which will not be described again here.

In the embodiments of the present disclosure, the user equipment can determine the corresponding timing advance according to the timing and/or network nodes, thereby solving the problem that uplink transmission may not be correctly received due to the fact that only the same timing advance can be used for uplink transmission when the user equipment switches transmission between multiple different network nodes in the related art. With the technical solution provided in this embodiment, the user equipment can determine different timing advances for different transmission scenarios, and perform uplink transmission according to the determined timing advance, so that the uplink transmission can be received correctly, thereby improving the reliability of uplink transmission. In addition, since the first network node can send the third timing advance and/or the fourth timing advance to the user equipment, the user equipment can obtain multiple different timing advances, thereby ensuring feasibility of the user equipment determining the timing advance based on the timing and/or the network node.

Referring to FIG. 15, FIG. 15 is a schematic diagram of an uplink transmission device provided in an embodiment of the present disclosure. The uplink transmission device is applied to a user equipment (UE). The device includes: a processor 1501 and a transceiver 1502.

The processor 1501 is used to determine timing advance according to timing and/or network nodes.

The transceiver 1502 is used to perform uplink transmission with the network nodes according to the timing advance.

Optionally, when a preceding transmission is a first transmission, the timing is the first timing; or
when a preceding transmission is a second transmission, the timing is the second timing; or
when receiving a downlink scheduling or downlink control information indication or uplink grant sent by the first network node, the timing is the first timing; or,
when receiving a downlink scheduling or downlink control information indication or uplink grant sent by the second network node, the timing is the second timing.

Optionally, the first timing may be the timing of the first network node, or reception time or reception timing of the user equipment to the first network node; the second timing may be the timing of the second network node, or reception time or reception timing of the user equipment to the second network node.

Optionally, the first transmission includes: transmission with the first network node, or transmission in which a coreset pool index associated with the transmission is a first value, or transmission in which a coreset pool index of a control resource set of a control channel for scheduling the transmission is a first value; and/or,
the second transmission includes: transmission with a second network node, or transmission in which a coreset pool index associated with the transmission is a second value, or transmission in which a coreset pool index of a control resource set of a control channel for scheduling the transmission is a second value.

Optionally, uplink transmission with the network node can be replaced by:
transmission of a coreset pool index associated with the uplink transmission, or transmission of a coreset pool index of a Control Resource Set of a control channel for scheduling transmission.

Optionally, the processor 1501 is further used to determine the timing advance being a third timing advance when the timing is the first timing and the second transmission is performed; or, determine the timing advance being a fourth timing advance when the timing is the second timing and the first transmission is performed;
where the first transmission includes: transmission with the first network node, or transmission in which a coreset pool index associated with the transmission is a first value, or transmission in which a coreset pool index of a control resource set of a control channel for scheduling the transmission is a first value; and/or,
the second transmission includes: transmission with a second network node, or transmission in which a coreset pool index associated with the transmission is a second value, or transmission in which a coreset pool index of a control resource set of a control channel for scheduling the transmission is a second value.

Optionally, the transceiver 1502 is further used to obtain the first timing advance and/or the second timing advance;
where the first timing advance is a timing advance for the user equipment to perform the first transmission with the first timing;
the second timing advance is a timing advance for the user equipment to perform the second transmission with the second timing.

Optionally, the processor 1501 is further used to obtain the third timing advance and/or the fourth timing advance according to the first timing advance and the second timing advance.

Optionally, the processor 1501 is further used to obtain the first time difference;
where the first time difference includes:
an arrival time difference of downlink signals or channels of the first network node and the second network node; or,
a time difference between the first timing and the second timing; or,
an arrival or reception time difference between the first transmission and the second transmission.

Optionally, the processor 1501 is further used to obtain the fourth timing advance based on the first timing advance and the first time difference, and/or obtain the third timing advance based on the second timing advance and the first time difference.

Optionally, the transceiver 1502 is further used to send a second timing advance or a timing advance difference to the first network node, where the timing advance difference is a difference between the first timing advance and the second timing advance.

Optionally, the transceiver 1502 is further used to receive or obtain the third timing advance and/or the fourth timing advance configured or indicated by the first network node.

Optionally, the processor 1501 is further used to obtain the first time difference.

The transceiver 1502 is further used to send the first time difference to the first network node;
wherein the first time difference includes:
an arrival time difference of downlink signals or channels of the first network node and the second network node; or,
a time difference between the first timing and the second timing; or,
an arrival or reception time difference between the first transmission and the second transmission.

In the embodiments of the present disclosure, the user equipment can determine the corresponding timing advance according to the timing and/or network nodes, thereby solving the problem that uplink transmission may not be correctly received due to the fact that only the same timing advance can be used for uplink transmission when the user equipment switches transmission between multiple different network nodes in the related art. With the technical solution provided in this embodiment, the user equipment can determine different timing advances for different transmission scenarios, and perform uplink transmission according to the determined timing advance, so that the uplink transmission can be received correctly, thereby improving the reliability of uplink transmission.

Referring to FIG. 16, FIG. 16 is a schematic diagram of an uplink transmission device provided in an embodiment of the present disclosure. The uplink transmission device is applied to a first network node. The device includes: a transceiver 1601.

The transceiver 1601 is used to send a third timing advance and/or a fourth timing advance to a user equipment (UE);
where the third timing advance is a timing advance for the user equipment to perform a second transmission with the first timing;
the fourth timing advance is a timing advance for the user equipment to perform a first transmission with the second timing.

Optionally, the first timing may be the timing of the first network node, or reception time or reception timing of the user equipment to the first network node; the second timing may be the timing of the second network node, or reception time or reception timing of the user equipment to the second network node.

Optionally, the first transmission includes: transmission with the first network node, or transmission in which a coreset pool index associated with the transmission is a first value, or transmission in which a coreset pool index of a control resource set of a control channel for scheduling the transmission is a first value; and/or,
the second transmission includes: transmission with a second network node, or transmission in which a coreset pool index associated with the transmission is a second value, or transmission in which a coreset pool index of a control resource set of a control channel for scheduling the transmission is a second value.

Optionally, the transceiver 1601 is further used to receive a second timing advance; or, receive a timing advance difference, where the timing advance difference is a difference between the first timing advance and the second timing advance;
where the second timing advance and/or the timing advance difference value are sent by the second network node or the user equipment.

Optionally, the first timing advance is a timing advance for the user equipment to perform the first transmission with the first timing;
the second timing advance is a timing advance for the user equipment to perform the second transmission with the second timing.

Optionally, the transceiver 1601 is further used to receive a first time difference reported by the user equipment;
where the first time difference includes:
an arrival time difference of the downlink signal or channel of the first network node and the second network node; or,
a time difference between the first timing and the second timing; or,
a difference in arrival time between the first transmission and the second transmission.

Optionally, the transceiver 1601 is further used to indicate a timing advance update to the user equipment, so that the user equipment can update the third timing advance and/or the fourth timing advance.

In the embodiment of the present disclosure, since the first network node can send the third timing advance and/or the fourth timing advance to the user equipment, the user equipment can obtain multiple different timing advances, thereby ensuring feasibility of the user equipment determining the timing advance based on the timing and/or the network node.

One embodiment of the present disclosure provides a communication equipment, including: a transceiver, a memory, a processor, and a program stored on the memory and executable on the processor;
the processor is used to read the program in the memory to implement the above uplink transmission method.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

One embodiment of the present disclosure provides a readable storage medium, including a computer program stored thereon; where the computer program is used to cause a processor to perform various processes of the above uplink transmission method embodiment, and the same technical effect can be achieved, which will not be repeated here to avoid repetition. The readable storage medium may be any available medium or data storage device that can be accessed by a processor, including but not limited to magnetic storage (such as floppy disk, hard disk, magnetic tape, magnetooptical disk (MO)), optical storage (such as CD, DVD, BD, HVD), and semiconductor memory (such as ROM, EPROM, EEPROM, non-volatile memory (Nand flash), solid-state drive (SSD)).

It should be noted that, in this document, the terms "comprising", "comprises" or any other variations thereof are intended to cover a non-exclusive inclusion, such that a process, method, article or device that includes a series of elements not only includes those elements, but also includes other elements not expressly listed or inherent in the process, method, article or device. Without further limitation, an element defined by the statement "comprises a..." does not exclude the presence of additional identical elements in a process, method, article or device that includes that element.

Through the description of the above embodiments, those skilled in the art can clearly understand that the above method embodiments can be implemented by means of software plus the necessary general hardware platform, and of course by hardware, but in many cases the former is a better implementation method. Based on this understanding, the technical solution of the present application, or the part that contributes to the relevant technology, can be embodied in the form of a software product, which is stored in a storage medium (such as ROM/RAM, disk, CD), and includes a number of instructions for enabling a service classification device (which can be a mobile phone, computer, server, air conditioner, or network device, etc.) to execute the methods described in each embodiment of the present application.

The embodiments of the present disclosure are described above in conjunction with the accompanying drawings, but the present disclosure is not limited to the above specific embodiments. The above specific embodiments are merely illustrative and not restrictive. Under the guidance of the present disclosure, those skilled in the art can also make many forms without departing from the spirit of the present disclosure and the protection scope of the claims, all of which are within the protection of the present application.

## Claims

1. An uplink transmission method, applied to a user equipment (UE), comprising:
determining timing advance based on timing and/or network nodes; and
performing uplink transmission with the network nodes according to the timing advance.

2. The method according to claim 1, wherein
when a preceding transmission is a first transmission, the timing is a first timing; or
when a preceding transmission is a second transmission, the timing is a second timing; or
when receiving a downlink scheduling or downlink control information indication or uplink grant sent by a first network node, the timing is the first timing; or,
when receiving a downlink scheduling or downlink control information indication or uplink grant sent by a second network node, the timing is the second timing.

3. The method according to claim 2, wherein
the first timing is a timing of the first network node, or reception time or reception timing of the user equipment to the first network node; and
the second timing is a timing of the second network node, or reception time or reception timing of the user equipment to the second network node.

4. The method according to claim 2, wherein
the first transmission includes: transmission with the first network node, or transmission in which a coreset pool index associated with the transmission is a first value, or transmission in which a coreset pool index of a control resource set of a control channel for scheduling the transmission is a first value; and/or,
the second transmission includes: transmission with a second network node, or transmission in which a coreset pool index associated with the transmission is a second value, or transmission in which a coreset pool index of a control resource set of a control channel for scheduling the transmission is a second value.

5. The method according to claim 1, wherein the performing uplink transmission with the network nodes according to the timing advance includes:
transmission of a coreset pool index associated with the uplink transmission, or transmission of a coreset pool index of a control resource set of a control channel for scheduling transmission.

6. The method according to claim 1, wherein the determining timing advance based on timing and/or network nodes, includes:
determining the timing advance being a third timing advance when the timing is a first timing and a second transmission is performed; or,
determining the timing advance being a fourth timing advance when the timing is a second timing and a first transmission is performed;
wherein the first transmission includes: transmission with a first network node, or transmission in which a coreset pool index associated with the transmission is a first value, or transmission in which a coreset pool index of a control resource set of a control channel for scheduling the transmission is a first value; and/or,
the second transmission includes: transmission with a second network node, or transmission in which a coreset pool index associated with the transmission is a second value, or transmission in which a coreset pool index of a control resource set of a control channel for scheduling the transmission is a second value.

7. The method according to claim 6, wherein the method further includes:
obtaining the first timing advance and/or the second timing advance;
wherein the first timing advance is a timing advance for the user equipment to perform the first transmission with the first timing; and
the second timing advance is a timing advance for the user equipment to perform the second transmission with the second timing.

8. The method according to claim 7, wherein the method further includes:
obtaining the third timing advance and/or the fourth timing advance according to the first timing advance and the second timing advance.

9. The method according to claim 8, wherein the method further includes:
obtaining a first time difference;
wherein the first time difference includes:
an arrival time difference of downlink signals or channels of the first network node and the second network node; or,
a time difference between the first timing and the second timing; or,
an arrival or reception time difference between the first transmission and the second transmission.

10. The method according to claim 9, wherein the obtaining the third timing advance and/or the fourth timing advance according to the first timing advance and the second timing advance, includes:
obtaining the fourth timing advance based on the first timing advance and the first time difference, and/or
obtaining the third timing advance based on the second timing advance and the first time difference.

11. The method according to claim 6, wherein the method further includes:
sending a second timing advance or a timing advance difference to the first network node, wherein the timing advance difference is a difference between the first timing advance and the second timing advance.

12. The method according to claim 6, wherein the method further includes:
receiving or obtaining the third timing advance and/or the fourth timing advance configured or indicated by the first network node.

13. The method according to claim 12, wherein the method further includes:
obtaining the first time difference; and
sending the first time difference to the first network node;
wherein the first time difference includes:
an arrival time difference of downlink signals or channels of the first network node and the second network node; or,
a time difference between the first timing and the second timing; or,
an arrival or reception time difference between the first transmission and the second transmission.

14. An uplink transmission method, applied to a first network node, comprising:
sending a third timing advance and/or a fourth timing advance to a user equipment (UE);
wherein the third timing advance is a timing advance for the user equipment to perform a second transmission with a first timing;
the fourth timing advance is a timing advance for the user equipment to perform a first transmission with a second timing.

15. The method according to claim 14, wherein
the first timing is a timing of the first network node, or reception time or reception timing of the user equipment to the first network node;
the second timing is a timing of a second network node, or reception time or reception timing of the user equipment to the second network node.

16. The method according to claim 14, wherein
the first transmission includes: transmission with the first network node, or transmission in which a coreset pool index associated with the transmission is a first value, or transmission in which a coreset pool index of a control resource set of a control channel for scheduling the transmission is a first value; and/or,
the second transmission includes: transmission with a second network node, or transmission in which a coreset pool index associated with the transmission is a second value, or transmission in which a coreset pool index of a control resource set of a control channel for scheduling the transmission is a second value.

17. The method according to claim 14, wherein the method further includes:
receiving a second timing advance; or,
receiving a timing advance difference, wherein the timing advance difference is a difference between the first timing advance and the second timing advance;
wherein the second timing advance and/or the timing advance difference value are sent by the second network node or the user equipment.

18. The method according to claim 17, wherein
the first timing advance is a timing advance for the user equipment to perform the first transmission with the first timing;
the second timing advance is a timing advance for the user equipment to perform the second transmission with the second timing.

19. The method according to claim 14, wherein the method further includes:
receiving a first time difference reported by the user equipment;
wherein the first time difference includes:
an arrival time difference of the downlink signal or channel of the first network node and the second network node; or,
a time difference between the first timing and the second timing; or,
a difference in arrival time between the first transmission and the second transmission.

20. The method according to claim 19, wherein the third timing advance and/or the fourth timing advance are obtained by the first network node according to configuration of the first time difference, the first timing advance and the second timing advance.

21. The method according to claim 14, wherein the method further includes:
indicating a timing advance update to the user equipment for the user equipment updating the third timing advance and/or the fourth timing advance.

22. An uplink transmission device, applied to a user equipment (UE), comprising:
a first module used to determine timing advance based on timing and/or network nodes;
a second module used to perform uplink transmission with the network nodes according to the timing advance.

23. An uplink transmission device, applied to a first network node, comprising:
a first module used to send a third timing advance and/or a fourth timing advance to a user equipment (UE);
wherein the third timing advance is a timing advance for the user equipment to perform a second transmission with a first timing;
the fourth timing advance is a timing advance for the user equipment to perform a first transmission with a second timing.

24. An uplink transmission system, comprising: a user equipment (UE) and network nodes; wherein the network nodes include: a first network node and a second network node;
the user equipment is used to determine timing advance based on timing and/or network nodes, and perform uplink transmission with the network nodes according to the timing advance.

25. An uplink transmission device, applied to a user equipment (UE), comprising: a processor and a transceiver;
wherein the processor is used to determine timing advance based on timing and/or network nodes;
the transceiver is used to perform uplink transmission with the network nodes according to the timing advance.

26. An uplink transmission device, applied to a first network node, comprising: a transceiver;
wherein the transceiver is used to send a third timing advance and/or a fourth timing advance to a user equipment (UE);
wherein the third timing advance is a timing advance for the user equipment to perform a second transmission with a first timing;
the fourth timing advance is a timing advance for the user equipment to perform a first transmission with a second timing.

27. A communication equipment, comprising: a transceiver, a memory, a processor, and a program stored in the memory and executable on the processor;
wherein the processor is used to read the program in the memory to perform steps in the uplink transmission method according to any one of claims 1 to 13, or to perform steps in the uplink transmission method according to any one of claims 14 to 21.

28. A readable storage medium, comprising a program stored thereon; wherein the program, when executed by a processor, causes the processor to perform steps in the uplink transmission method according to any one of claims 1 to 13, or to perform steps in the uplink transmission method according to any one of claims 14 to 21.
